# EUROPÄISCHE PATENTSCHRIFT

(11) **EP 4 049 071 B1**
(45) Veröffentlichungstag und Bekanntmachung des Hinweises auf die Patenterteilung: **14.05.2025**
(21) Anmeldenummer: 20803069.2
(22) Anmeldetag: 21.10.2020
(51) Int. Cl.: G02B 5/00, G02B 27/09

(54) **SEGMENTIERTES STRAHLFORMUNGSELEMENT UND LASERBEARBEITUNGSANLAGE**
SEGMENTED BEAMFORMING ELEMENT AND LASER WORKING SYSTEM
ÉLÉMENT SEGMENTÉ DE MISE EN FORME DE FAISCEAU ET INSTALLATION D'USINAGE LASER

(30) Priorität: 21.10.2019 DE 102019128362
(43) Veröffentlichungstag der Anmeldung: 31.08.2022
(73) Patentinhaber: TRUMPF Laser- und Systemtechnik SE, 71254 Ditzingen (DE)
(72) Erfinder: FLAMM, Daniel, 71640 Ludwigsburg (DE); CHEN, Keyou, 71254 Ditzingen (DE)
(74) Vertreter: Trumpf Patentabteilung
(86) Internationale Anmeldenummer: PCT/EP2020/079570
(87) Internationale Veröffentlichungsnummer: WO 2021/078772

(56) Entgegenhaltungen:
- FLAMM DANIEL ET AL: "Beam shaping for ultrafast materials processing", LASER RESONATORS, MICRORESONATORS, AND BEAM CONTROL XXI, 4 March 2019 (2019-03-04), pages 50, XP055772971, ISBN: 978-1-5106-2451-1, Retrieved from the Internet <URL:https://doi.org/10.1117/12.2511516> [retrieved on 20210208], DOI: 10.1117/12.2511516
- VIJAYAKUMAR AND SHANTI BHATTACHARYA A: "Phase-shifted Fresnel axicon", OPTICS LETTERS, OPTICAL SOCIETY OF AMERICA, US, vol. 37, no. 11, 1 June 2012 (2012-06-01), pages 1980 - 1982, XP001575868, ISSN: 0146-9592, Retrieved from the Internet <URL:https://doi.org/10.1364/OL.37.001980> [retrieved on 20120530], DOI: 10.1364/OL.37.001980
- ZHU LONG ET AL: "Arbitrary manipulation of spatial amplitude and phase using phase-only spatial light modulators", SCIENTIFIC REPORTS, vol. 4, no. 1, 11 December 2014 (2014-12-11), XP055773413, Retrieved from the Internet <URL:http://www.nature.com/articles/srep07441> [retrieved on 20210208], DOI: 10.1038/srep07441

## Beschreibung

Die vorliegende Erfindung betrifft ein Strahlformungselement zum Ausbilden von in Propagationsrichtung beugungsfreien Intensitätszonen. Ferner betrifft die Erfindung eine Laserbearbeitungsanlage mit einem Strahlformungselement.

Bei der transparenten Laserbearbeitung werden mit Laserstrahlung Modifikationen in einem Material, das im Wesentlichen transparent für die Laserstrahlung ist und hierin als transparentes Material bezeichnet wird, erzeugt. Eine im Volumen des Materials eintretende Absorption (kurz Volumenabsorption) der Laserstrahlung kann bei transparenten Materialen beispielsweise zum Bohren, zum Trennen durch induzierte Spannungen, zum Schweißen, zum Bewirken einer Modifikation des Brechungsverhaltens oder für selektives Laserätzen eingesetzt werden. Siehe hierzu zum Beispiel die Anmeldungen WO 2016/079062 A1, WO 2016/079063 A1 und WO 2016/079275 A1 der Anmelderin.

Aus der wissenschaftlichen Veröffentlichung Flamm, Daniel et al.: "Beam shaping for ultrafast materials processing", Proceedings Volume 10904, Laser Resonators, Microresonators, and Beam Control XXI; 109041G (2019) https://doi.org/10.1117/12.2511516, ist ein diffraktives optisches Strahlformungselement zum Aufprägen einer Phasenverteilung auf ein transversales Strahlprofil eines Laserstrahls bekannt, wobei das Strahlformungselement mehrere Winkelsegmente aufweist, wobei benachbarte Winkelsegmente einen Phasenversatz zueinander aufweisen und wobei die azimutalen Segmentbreiten von allen vorhandenen Winkelsegmenten gleich sind.

In diesen Einsatzfeldern kann es wichtig sein, sowohl eine Geometrie als auch die Art der Modifikation im Material geeignet kontrollieren zu können. Neben Parametern wie Laserwellenlänge, zeitliche Pulsform, Anzahl der Pulse, und Pulsenergie kann dabei die Strahlform relevant sein.

So werden z.B. ultrakurzpulslaser-basierte Glasmodifikationsprozesse zum Trennen von Glas häufig mit langgezogenen Fokusverteilungen durchgeführt, wie sie z.B. bei Bessel-ähnlichen Strahlprofilen gegeben sind. Diese können längliche Modifikationen im Material ausbilden, die sich im Inneren des Materials in Propagationsrichtung der Laserstrahlung erstrecken.

Strahlformungselemente und Optik-Aufbauten, mit denen in Strahlausbreitungsrichtung langgezogene, schlanke Strahlprofile mit hohem Aspektverhältnis für die Laserbearbeitung bereitgestellt werden können, werden z.B. in der genannten WO 2016/079062 A1 beschrieben. Beispielsweise offenbart WO 2016/079062 A die Ausbildung von Strahlprofilen, die sich entlang der Ausbreitungsrichtung ändern und eine Periodizität, z.B. ein periodisches Intensitätsprofil entlang der Z-Achse, aufweisen können.

Einem Aspekt dieser Offenbarung liegt die Aufgabe zugrunde, ein diffraktives optisches Strahlformungselement anzugeben, das eine Strahlformung für eine maßgeschneiderte Volumenabsorption ermöglicht. Insbesondere liegt der Offenbarung die Aufgabe zugrunde, für die Bearbeitung transparenter Werkstoffe (d.h. für die Laserstrahlung transparenter Materialien) ein Strahlformungselement bereitzustellen, welches in Strahlausbreitungsrichtung langgezogene, schlanke Strahlprofile mit hohem Aspektverhältnis für die Laserbearbeitungsanwendungen bereitstellen kann.

Zumindest eine dieser Aufgaben wird gelöst durch ein Strahlformungselement nach Anspruch 1 und durch eine Laserbearbeitungsanlage nach Anspruch 10. Weiterbildungen sind in den Unteransprüchen angegeben.

In einem Aspekt umfass ein diffraktives optisches Strahlformungselement zum Aufprägen einer Phasenverteilung auf ein transversales Strahlprofil eines Laserstrahls aneinander angrenzenden Flächenelementen, die eine flächige Gitterstruktur aufbauen. In der Gitterstruktur ist jedem Flächenelement ein Phasenschiebungswert zugeordnet und die Phasenschiebungswerte definieren eine zweidimensionale Phasenverteilung. Die zweidimensionale Phasenverteilung weist eine Strahlmittenposition auf, die eine radiale Richtung in der flächigen Gitterstruktur definieren. Die Flächenelemente sind einer Mehrzahl von Winkelsegmenten zugeordnet. Jedes Winkelsegment weist eine azimutale Segmentbreite bezüglich der Strahlmittenposition auf. Die Phasenschiebungswerte in den Winkelsegmenten bilden jeweils bezüglich der Strahlmittenposition radialsymmetrische Phasenverläufe aus. Die radialsymmetrischen Phasenverläufe bilden in radialer Richtung Gitterfunktionen aus, die eine gleiche Gitterperiode aufweisen. Zu jeder der Gitterfunktionen ist eine Segmentgitterphase, insbesondere bezüglich der Strahlmittenposition, zugeordnet. Die azimutalen Segmentbreiten von mindestens zwei benachbarten Winkelsegmenten unterscheiden sich. Zusätzlich weisen die Segmentgitterphasen von mindestens zwei benachbarten Winkelsegmenten einen Segmentgitterphasenunterschied zwischen 0 und2π auf.

In einem weiteren Aspekt ist eine Laserbearbeitungsanlage für die Bearbeitung eines Materials mit einem Laserstrahl durch Modifizieren des Materials in einer Fokuszone, die in einer Ausbreitungsrichtung des Laserstrahls langgezogen ausgebildet ist, offenbart. Die Laserbearbeitungsanlage umfasst eine Laserstrahlquelle, die einen Laserstrahl ausgibt, ein optisches System, das ein wie hierin offenbartes diffraktives optisches Strahlformungselement und ein strahlformendes und strahlführendes Modul mit einer Fokussierlinse aufweist. Das diffraktive optische Strahlformungselement ist im Strahlengang des Laserstrahls angeordnet, um dem Laserstrahl eine zweidimensionale Phasenverteilung aufzuprägen, und die zweidimensionale Phasenverteilung bewirkt eine Ausbildung der langgezogenen Fokuszone im Material durch Fokussieren des Laserstrahls mit der Fokussierlinse.

In einigen Ausführungsformen kann die Phasenverteilung bezüglich der Strahlmittenposition punktsymmetrisch ausgebildet sein. Ferner können mindestens zwei Winkelsegmente bezüglich der Strahlmittenposition identische radialsymmetrische Phasenverläufe ausbilden, wobei sich die Winkelsegmente insbesondere bezüglich der Strahlmittenposition gegenüberliegen können.

In einigen Ausführungsformen können die Gitterfunktionen jeweils einen Anteil eines Sägezahngitterphasenverlaufs aufweisen, wobei eine Steigung eines Anstiegsbereichs in jedem der Sägezahngitterphasenverläufe einem vorbestimmten Axicon-Winkel entsprechen kann, der dem diffraktiven optischen Strahlformungselement zugeordnet ist. Der vorbestimmte Axicon-Winkel kann im Bereich von 0,5° bis 40° für eine Erzeugung eines realen Bessel-Strahl-Zwischenfokus mit dem Laserstrahl strahlabwärts des diffraktiven optischen Strahlformungselements oder im Bereich von -0,5° bis -40° für ein Zugrundelegen eines virtuellen Bessel-Strahl-Zwischenfokus strahlaufwärts des diffraktiven optischen Strahlformungselements liegen.

Die azimutalen Segmentbreiten des diffraktiven optischen Strahlformungselements können in einigen Ausführungsformen im Bereich von 2π/300 bis π liegen. Optional kann jedes der Mehrzahl von Winkelsegmenten eine gleiche vorbestimmte Segmentbreite aufweist.

In einigen Ausführungsformen kann die zweidimensionale Phasenverteilung durch eine oder mehrere Symmetrieachsen gekennzeichnet sein.

In einigen Ausführungsformen kann die die Gitterperiode in radialer Richtung konstant ausgebildet sein.

In einigen Ausführungsformen kann die Gitterperiode in radialer Richtung einen asphärischen, bevorzugt quadratischen und besonders bevorzugt einen linearen Verlauf, aufweisen. Alternativ oder zusätzlich kann in die zweidimensionale Phasenverteilung eine Kollimationsphasenverteilung integriert sein, die über die Mehrzahl von Winkelsegmenten bezüglich der Strahlmittenposition radialsymmetrisch ausgebildet ist.

In einigen Ausführungsformen der Laserbearbeitungsanlage kann eine Strahlmittenposition des diffraktiven optischen Strahlformungselements auf eine Strahlmitte eines transversalen Strahlprofils des Laserstrahls ausgerichtet sein.

Ferner kann die Laserbearbeitungsanlage eine Werkstückhalterung umfassen, wobei eine relative Positionierbarkeit des strahlformenden und strahlführenden Moduls und eines von der Werkstückhalterung bereitgestellten Werkstücks als zu bearbeitendes Material vorgesehen ist.

Die hierin beschriebenen Konzepte betreffen insbesondere (dreidimensionale) Strahlprofile, die beugungsfrei (nicht beugend) in Ausbreitungsrichtung ausgebildet werden. Da keine wesentliche Änderung der Intensität im Strahlprofil entlang der Ausbreitungsrichtung vorliegt, können in Ausbreitungsrichtung durchgehend ausgebildete Modifikationen im Material erzeugt werden.

Hierin werden Konzepte offenbart, die es erlauben, zumindest teilweise Aspekte aus dem Stand der Technik zu verbessern. Insbesondere ergeben sich weitere Merkmale und deren Zweckmäßigkeiten aus der folgenden Beschreibung von Ausführungsformen anhand der Figuren. Von den Figuren zeigen:
- Fig. 1A: eine schematische Skizze eines Lasersystems mit einem strahlformenden Element zur Bearbeitung eines Materials mit einer z.B. länglich ausgebildeten Fokuszone,
- Fig. 1B: eine schematische Skizze zur Verdeutlichung der Aufprägung einer Axicon-Phase und einer Bessel-Fokuszone,
- Fig. 2A: eine schematische Darstellung einer flächigen Phasenverteilung eines strahlformenden Elements, das mehrere Segmente aufweist,
- Fig. 2B: eine schematische vergleichende Darstellung zweier radialer Phasenverläufe von Segmenten des strahlformenden Elements aus Fig. 2A,
- Fig. 2C: eine Darstellung eines radialen Phasenverlaufs mit in radialer Richtung zunehmender Gitterperiode,
- Fig. 3A und 3B: Abbildungen zur Verdeutlichung einer flächigen Phasenverteilung eines ersten Beispiels eines segmentierten strahlformenden Elements,
- Fig. 3C und 3D: berechnete Intensitätsverteilungen im Raum, wie sie mit einer Phasenverteilung der Fig. 3A in einem Material erzeugt werden können,
- Fig. 4A und 4B: Abbildungen zur Verdeutlichung einer flächigen Phasenverteilung eines zweiten Beispiels eines segmentierten strahlformenden Elements und
- Fig. 4C und 4D: berechnete Intensitätsverteilungen im Raum, wie sie mit einer Phasenverteilung der Fig. 4A in einem Material erzeugt werden können.

Hierin beschriebene Aspekte basieren zum Teil auf der Erkenntnis, dass das eingangs angesprochene entlang der Z-Achse periodisch ausgebildete Intensitätsprofil, wie es durch Beugung des Strahls in Ausbreitungsrichtung entsteht, die Ausbildung von Modifikationen bei der Laserbearbeitung beeinflussen kann. Beispielsweise können Materialschwächungen, wie sie sich bei derartigen Intensitätsprofilen ergeben können, in Ausbreitungsrichtung zu weit voneinander getrennt liegen, so dass die Qualität eines Trennergebnisses beeinflusst werden kann.

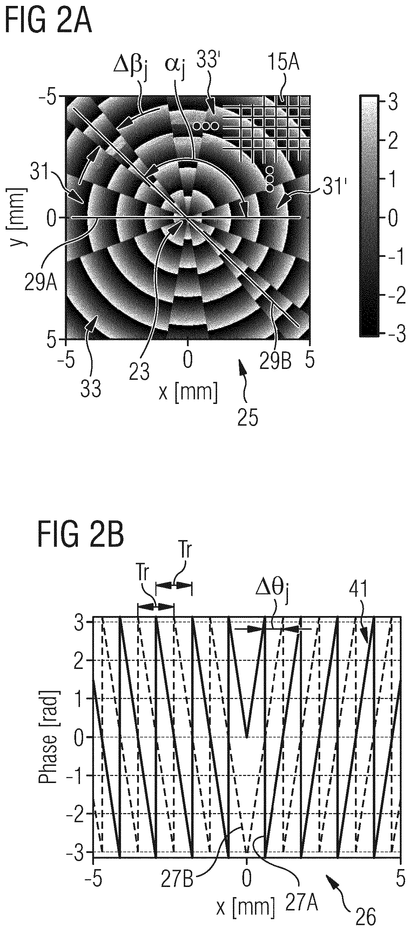

Entsprechend streben die hierin offenbarten Konzepte eine Erzeugung von in Ausbreitungsrichtung (d.h. longitudinalen) beugungsfreien Strahlprofilen an. Die Erfinder haben hierzu erkannt, dass mit einem strahlformenden Element spezifische Phasenverläufe in mehreren (Azimutal-) Winkelsegmenten aufgeprägt werden können. Dabei sind die segmentspezifischen Phasenverläufe so ausgelegt, dass sie zusammen ein Strahlprofil erzeugen, das in Ausbreitungsrichtung im Wesentlichen beugungsfrei ist. Eine beugungsfreie Ausbildung kann erreicht werden, wenn in den Winkelsegmenten Phasenverläufe aufgeprägt werden, die in radialer Richtung die gleiche Gittercharakteristik (beispielsweise eine konstante/sich radial gleich ändernde "gleiche" Gitterperiode) aufweisen und sich im radialen Phasenverlauf in ihrer "Absolutphase", hierin als Segmentgitterphase Θj bezeichnet, um einen Segmentgitterphasenunterschied (ΔΘj in Fig. 2B), unterscheiden. Hierbei bezieht sich die Bedingung der "gleichen Gitterperiode" auf die Phasenanteile zur Ausbildung einer langgezogenen Fokuszone, wie sie jeweils in einem Segment auf den Eingangsstrahl gelegt werden. Die Gitterperiode kann dabei auch in radialer Richtung variieren, z.B. bei Überlagerung einer Linse, wodurch sich die Gitterperiode in radialer Richtung asphärisch, linear oder quadratisch ändern kann.

Die Erfinder haben ferner erkannt, dass für die Formgebung eines dreidimensionalen Strahlprofils azimutale Breiten der Segmente und azimutale Positionen der Segmente variiert werden können, ohne dass das Merkmal einer in Ausbreitungsrichtung beugungsfreien Ausbildbarkeit eines Strahlprofils (einer Fokusverteilung) verloren geht.

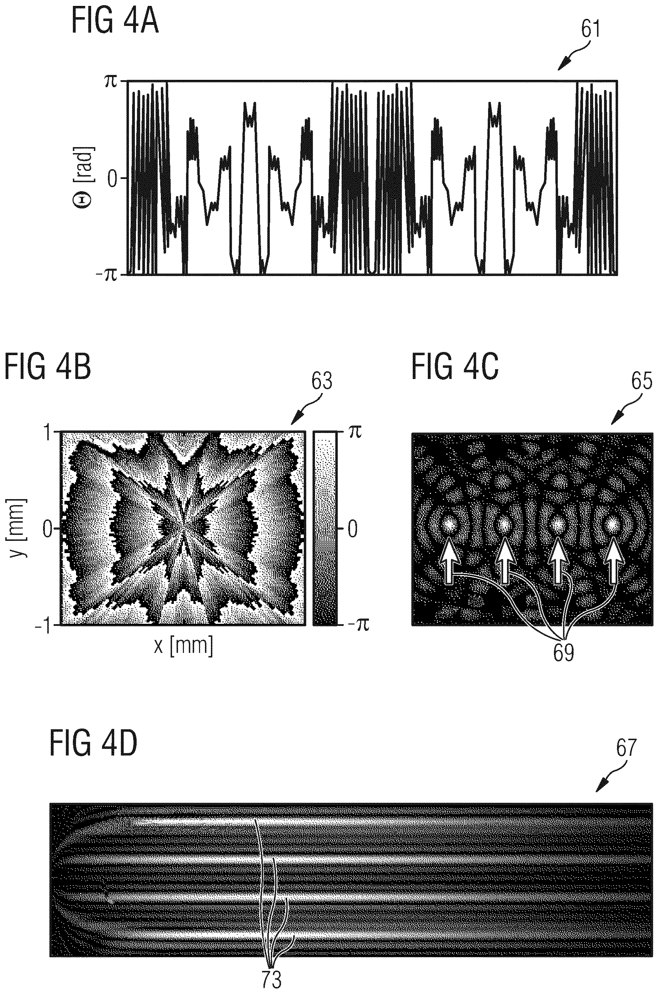

Dabei ist die azimutale Breite eines Segments (hierin auch als Segmentbreite bezeichnet) der Bereich des Azimutalwinkels, der einem Segment zugeordnet wird. Die Segmentbreite liegt beispielsweise im Bereich von 2π/200 bis π. Jedem räumlich definierten Segment ist eine Segmentgitterphase Θj zugeordnet. Ferner können Symmetrieanforderungen wie eine Punktsymmetrie zu einem Zentrum der Phasenmaske oder wie eine oder mehrere Symmetrieachsen an die Phasenverteilung gestellt werden, sodass sich Segmente in ihrer Phasenverteilung entsprechen. Beispielsweise können gegenüberliegende Segmente bei Punktsymmetrie gleiche Phasenverteilungen aufweisen. Im Beispiel der Fig. 4B lag bei einer Untergliederung in 200 Segmente aufgrund der Symmetrie die Anzahl der zu bestimmenden Segmentgitterphasen Θj bei 50.

Eine Position eines Segments (hierin auch als Segmentposition bezeichnet) kann beispielsweise durch einen Zentralwinkel des jeweiligen Segments angegeben werden.

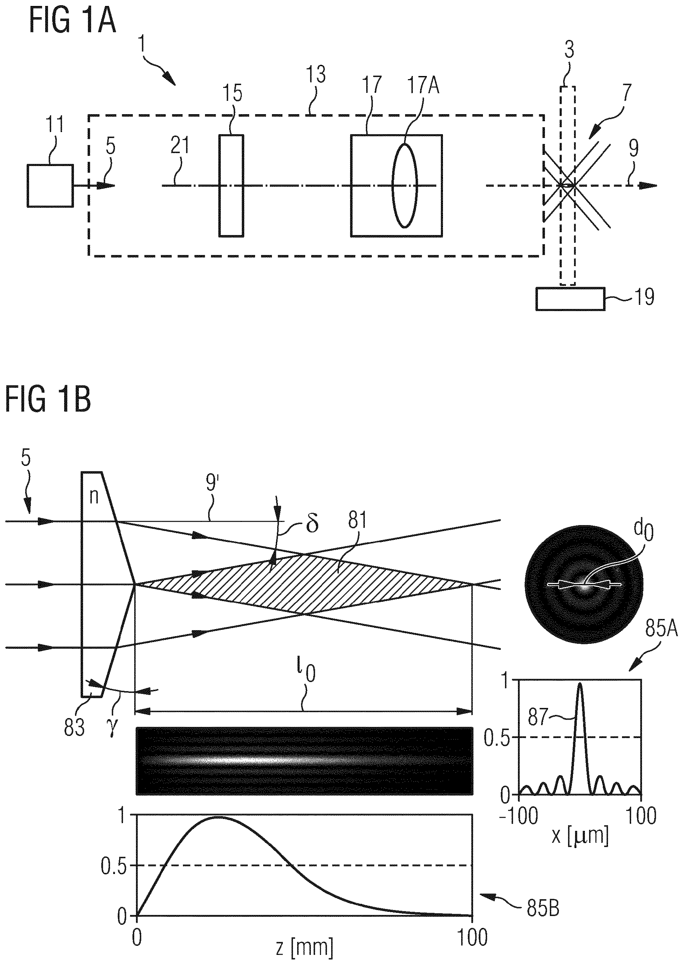

Die Verwendung und beispielhafte Ausbildungsformen von strahlformenden Elementen wird nachfolgend in Zusammenhang mit den Figuren 1 bis 4D beschrieben.

Fig.1 zeigt eine schematische Darstellung einer Laserbearbeitungsanlage 1 für die Bearbeitung eines Materials 3 mit einem Laserstrahl 5. Die Bearbeitung bewirkt ein Modifizieren des Materials 3 in einer Fokuszone 7. Wie in Fig. 1A angedeutet kann die Fokuszone 7 allgemein in einer Ausbreitungsrichtung 9 des Laserstrahls 5 langgezogen ausgebildet werden. Beispielsweise ist die Fokuszone 7 eine Fokuszone eines Bessel-Strahls oder eines inversen Bessel-Strahls, wie sie sich in einem im Wesentlichen transparenten Material ausbilden kann.

Die Laserbearbeitungsanlage 1 umfasst eine Laserstrahlquelle 11, die den Laserstrahl 5 erzeugt und ausgibt. Der Laserstrahl 5 ist beispielsweise gepulste Laserstrahlung. Laserpulse weisen z.B. Pulsenergien auf, die zu Pulsspitzenintensitäten führen, die eine Volumenabsorption im Material 3 und damit eine Ausbildung der Modifikation in einer gewünschten Geometrie bewirken.

Zur Strahlformung und Führung umfasst die Laserbearbeitungsanlage 1 ferner ein optisches System 13. Das optische System 13, auch Bearbeitungskopf genannt, umfasst ein diffraktives optisches Strahlformungselement 15 und ein strahlformendes und strahlführendes Modul 17 mit einer Fokussierlinse 17A.

In Fig. 1A nicht gezeigt sind weitere strahlführende Komponenten des optischen Systems 13 wie zum Beispiel Spiegel, Linsen, Teleskopanordnungen, Filter sowie Steuerungsmodule zur Ausrichtung der verschiedenen Komponenten.

Schließlich umfasst die Laserbearbeitungsanlage 1 eine schematisch angedeutete Werkstückhalterung 19 zum Lagern eines Werkstücks. In Fig. 1A ist das Werkstück das zu bearbeitende Material 3. Es kann beispielsweise eine Glasscheibe oder eine für die eingesetzte Laserwellenlänge weitgehend transparente Scheibe in keramischer oder kristalliner Ausführung (beispielsweise aus Saphir oder Silizium) sein. Für die Bearbeitung des Materials 3 erfolgt eine Relativbewegung zwischen dem optischen System 13 und dem Material 3, sodass die Fokuszone 7 an verschiedenen Positionen entlang einer vorbestimmten Trajektorie ausgebildet werden kann. Für ein Trennen des Materials 3 in zwei Teile bestimmt die Trajektorie dann den Verlauf einer Trennlinie.

Allgemein wird der Laserstrahl 5 durch Strahlparameter wie Wellenlänge, spektrale Breite, zeitliche Pulsform, Ausbildung von Pulsgruppen, Strahldurchmesser, transversales Strahlprofil/Eingangsintensitätsprofil, transversales Eingangsphasenprofil, Eingangsdivergenz und/oder Polarisation bestimmt.

Gemäß Fig. 1A wird der Laserstrahl 5 dem optischen System 13 zur Strahlformung, d.h. zum Umwandeln eines oder mehrerer der Strahlparameter, zugeführt. Üblicherweise wird für die Lasermaterialbearbeitung der Laserstrahl 5 angenähert ein kollimierter Gaußscher Strahl mit einem transversalen Gaußschen Intensitätsprofil sein, der von der Laserstrahlquelle 11, beispielsweise einem Ultrakurzpuls-Hochleistungslasersystem, erzeugt wird. Hinsichtlich der einsetzbaren Laserstrahlung wird beispielhaft auf die in den eingangs genannten Anmeldungen der Anmelderin beschriebenen Lasersysteme und Parameter verwiesen.

Dem optischen System 13 wird üblicherweise eine optische Achse 21 zugeordnet, die bevorzugt durch einen Symmetriepunkt des Strahlformungselements 15 (z.B. durch eine Strahlmittenposition 23 des diffraktiven optischen Strahlformungselements 15, siehe Fig. 2A) verläuft. Bei einem rotationssymmetrischen Laserstrahl 5 kann eine Strahlmitte eines transversalen Strahlprofils des Laserstrahls 5 entlang der optischen Achse 21 des optischen Systems 13 auf die Strahlmittenposition 23 einfallen.

Das Strahlformungselement 15 ist ein räumlicher Lichtmodulator Es kann beispielsweise als ein fest eingeschriebenes diffraktives optisches Element ausgeführt sein. Ferner kann das Strahlformungselement 15 elektronisch durch ein zeitabhängiges Einstellen eines programmierbaren diffraktiven optischen Elements umgesetzt werden (Flüssigkristalldisplay (SLM spatial light modulator)). Üblicherweise sind derartige Strahlformungselemente digitalisierte Strahlformungselemente, die zum Aufprägen eines Phasenverlaufs auf ein transversales Strahlprofil eines Laserstrahls ausgelegt sind. Die Digitalisierung kann dabei die Verwendung von diskreten Werten für die Phasenschiebung und/oder die transversale Gitterstruktur betreffen.

Allgemein kann ein einstellbares diffraktives optisches Strahlformungselement sehr feine Phasenänderungen bei einer lateral gröberen Auflösung erlauben, im Unterschied zu beispielsweise einem lithographisch hergestellten, fest eingeschriebenen diffraktiven optischen Element. Ein fest eingeschriebenes diffraktives optisches Element kann z.B. planparallele Stufen aufweisen, wobei eine Materialdicke im Bereich einer Stufe das Ausmaß einer Phasenschiebung bestimmt. Die lithographische Herstellung der planparallelen Stufen kann eine hohe laterale Auflösung ermöglichen.

Je nach Ausführung eines Strahlformungselements kann es in Transmission oder in Reflexion verwendet werden, um einem Laserstrahl einen Phasenverlauf aufzuprägen. Allgemein können die hierin vorgeschlagenen Strahlformungselemente beispielsweise in den in den eingangs genannten Anmeldungen beschriebenen Optik-Aufbauten der Anmelderin eingesetzt werden.

In Zusammenhang mit den Figuren 2A bis 4D werden die grundlegenden Merkmale beispielhaft erläutert.

Strukturelle, die Phasenaufprägung bewirkende und flächig ausgebildete Strahlformungselemente werden auch als Phasenmasken bezeichnet, wobei sich die Maske auf die Phase der zweidimensionalen Phasenverteilung bezieht.

Die zweidimensionale Phasenverteilung der hierin offenbarten Konzepte ist insbesondere für die Erzeugung (nach Fokussierung mit der Fokussierlinse 17A) einer langgezogenen Fokuszone im Werkstück ausgelegt.

Fig. 1B verdeutlicht hierzu die Erzeugung einer "realen" Bessel-Strahl-Fokuszone 81, wie sie z.B. mit einer Teleskopanordnung in ein Werkstück abgebildet werden kann. Zur Ausbildung der Bessel-Strahl-Fokuszone 81 wird eine transversale Axicon-Phasenverteilung auf den Laserstrahl 5 aufgeprägt. Die Axicon-Phasenverteilung entspricht der Phase, die mit einem (rotationssymmetrischen) Axicon 83 aus einem Material mit Brechungsindex n auf den einfallenden Strahl 5 transversal aufgeprägt wird. Das Axicon 83 wird durch einen Axicon-Winkel γ charakterisiert, der den Winkel der konisch zulaufenden Axicon-Spitze spezifiziert. Ein diffraktives optisches Element kann derartige Axicon-Phasenverteilungen mit entsprechend an Flächenelementen vorgesehenen Phasenschiebungswerten reproduzieren (siehe auch Fig. 2A).

Fig. 1B zeigt ferner einen Winkel δ zu einer Ausbreitungsrichtung 9' der einfallenden Laserstrahlung, unter dem die (transversalen) Strahlanteile der Bessel-Strahl-Fokuszone 81 zugeführt werden. Der Winkel δ hängt vom Axicon-Winkel γ und vom Brechungsindex n ab. hängt. Eine maximal mögliche Länge l₀ der Bessel-Strahl-Fokuszone 81 ergibt sich aus dem Strahldurchmesser der einfallenden Laserstrahlung und dem Winkel δ.

Fig. 1B verdeutlicht ferner eine sich ergebende transversale Intensitätsverteilung 85A sowie eine longitudinale Intensitätsverteilung 85B, jeweils im Schnitt und als Intensitätsprofil durch die Strahlachse (in X-Richtung) bzw. entlang der Strahlachse (in Z-Richtung). Beispielhaft ist ferner eine Durchmesser d₀ eines Hauptmaximums 87 in der transversale Intensitätsverteilung 85A angedeutet.

Wie in Fig. 1B noch vor der Abbildung der Fokuszone in das Werkstück gezeigt wird, entspricht eine Fokuszone einer dreidimensionalen Intensitätsverteilung, die in dem zu bearbeitenden Material 3 das räumliche Ausmaß der Wechselwirkung und damit das Ausmaß der Modifikation bestimmt. Als langgezogene Fokuszone wird somit in einem in Ausbreitungsrichtung 9 langgezogenen Bereich im Material 3 eine Fluenz/Intensität erzeugt, die über der für die Bearbeitung/Modifikation relevanten Schwellenfluenz/-intensität dieses Materials liegt.

Üblicherweise spricht man von einer langgezogenen Fokuszone, wenn die dreidimensionale Intensitätsverteilung hinsichtlich einer Zielschwellenintensität durch ein Aspektverhältnis (Ausdehnung in Ausbreitungsrichtung im Verhältnis zur lateralen Ausdehnung) von mindestens 10:1, beispielsweise 20:1 und mehr oder 30:1 und mehr z.B. 10000:1, gekennzeichnet ist. Eine derartige langgezogene Fokuszone kann zu einer Modifikation des Materials mit einem ähnlichen Aspektverhältnis führen. In einigen Ausführungsformen können sich z.B. auch in Ausbreitungsrichtung parallel zu einander verlaufende (Teil-) Fokuszonen ausbilden, von denen jede ein entsprechendes Aspektverhältnis aufweist. Für die in Fig. 1B gezeigte Bessel-Strahl-Fokuszone 81 ist das Verhältnis der longitudinale Ausdehnung zur transversalen Ausdehnung des Hauptmaximums 87 auf der optischen Achse gegeben durch r0 = 2.405/kr, mit kr=2*π/λ*(n-1)*γ, wobei γ der Axiconwinkel, λ die Wellenlänge und n der Brechungsindex des Materials des Axicons.

Insbesondere mit Bessel-Strahlprofilen kann die Energie im Wesentlichen über die gesamte Länge einer hervorzurufenden Modifikation lateral in die langgezogenen Fokuszone (in Fig. 1B unter einem Winkel δ zur Ausbreitungsrichtung 9' in die noch nicht abgebildete Bessel-Strahl-Fokuszone 81) für die Volumenabsorption eingebracht werden. In diesem Sinne kann ein Gaußscher Strahl keinen vergleichbaren langgezogenen Fokus erzeugen, da die Energiezufuhr im Wesentlichen longitudinal und nicht lateral erfolgt.

Zurückkommend auf die Strahlformung zeigt Fig. 2A schematisch eine zweidimensionale Phasenverteilung 25 eines diffraktiven optischen Strahlformungselements 15, wie sie mit dem diffraktiven optischen Strahlformungselement 15 über ein transversales Strahlprofil aufgeprägt werden kann. Fig. 2B zeigt einen zugehörigen Graph 26 zur Verdeutlichung von radialen Phasenverläufen, wie sie in der zweidimensionalen Phasenverteilung 25 in radialer Richtung ausgehend von der Strahlmittenposition 23 des diffraktiven optischen Strahlformungselements 15 in entsprechenden Segmenten ausgebildet sind.

In den Figuren 2A und 2B sind die zugrundeliegenden Phasenschiebungswerte (Phase in rad) von -π bis +π in Graustufen dargestellt bzw. als Phasenwert angegeben. Wie nachfolgend erläutert weisen die Phasenverteilung 25 und die radialen Phasenverläufe zur Reproduktion einer Axicon-ähnlichen Phasenaufprägung eine beispielhafte Sägezahnstruktur auf.

Die zweidimensionale Phasenverteilung 25 ist in mehrere Winkelsegmente (nachfolgend auch kurz als Segment bezeichnet) segmentiert (unterteilt). Das Strahlformungselement 15 kann - wie ein im Sinne der Erfindung modifiziertes Axicon - im Strahlengang des Laserstrahls 5 zur Aufprägung einer Phase gemäß der zweidimensionalen Phasenverteilung 25 auf das transversale Strahlprofil des Laserstrahls 5 angeordnet werden.

In Fig. 2A sind Parameter der zweidimensionalen Phasenverteilung 25 und Parameter einer zugeordneten flächigen Gitterstruktur verdeutlicht, wobei die flächige Gitterstruktur die zweidimensionale Phasenverteilung 25 umsetzt.

Die flächige Gitterstruktur wird mithilfe von aneinander angrenzenden Flächenelementen 15A und diesen zugeordneten Phasenschiebungswerten aufgebaut. Hierin beziehen sich die Flächenelemente 15A auf räumliche Struktureinheiten der flächigen Gitterstruktur, mit denen eine voreingestellte Phasenschiebung für die auftreffende Laserstrahlung gemäß einem zugeordneten Phasenschiebungswert bewirkt werden kann. Ein Flächenelement 15A wirkt entsprechend auf einen zweidimensionalen Ausschnitt des transversalen Strahlprofils des Laserstrahls 15 und modifiziert die Phase um den Phasenschiebungswert. Flächenelemente entsprechen dem zuvor angesprochenen Aspekt der Digitalisierung. Beispielhafte Flächenelemente 15A sind in Fig. 2A im oberen rechten Eck der Phasenverteilung 25 angedeutet, wobei das Größenverhältnis zwischen den beispielhaft rechteckigen Flächenelementen und der Phasenabhängigkeit von der Herstellung des Strahlformungselements abhängt.

Die Flächenelemente 15A bilden eine Mehrzahl von Winkelsegmenten aus, die jeweils eine einheitliche radiale Entwicklung der Phase (Phasenverteilung) über die zugehörige Winkelsegmentflächen zeigen. Die Winkelsegmente weisen jeweils eine azimutale Segmentbreite bezüglich der Strahlmittenposition 23 auf. In Fig. 2A ist die azimutale Segmentbreite durch einen azimutalen Winkelbereich Δβj für ein Winkelsegment verdeutlicht. Die in Fig. 2A gezeigten Winkelsegmentflächen entsprechen Kreissektorflächen, die durch die Grundform des Strahlformungselements 15 im äußeren Randbereich beschnitten sein können. So liegt in Fig. 2A beispielhaft eine quadratische Grundform des Strahlformungselements 15 vor.

Beispielsweise können die azimutalen Segmentbreiten im Bereich von 2π/300 bis π liegen. Optional kann jedes der Mehrzahl von Winkelsegmenten eine gleiche vorbestimmte Segmentbreite aufweisen, z.B. einen Azimutalwinkelbereich von 2π/200.

In die Phasenverteilung 25 der Fig. 2A ist ferner die bereits angesprochene Strahlmittenposition 23 eingezeichnet, auf die die Mitte des einfallenden Laserstrahls 5 justiert wird. Die Strahlmittenposition 23 definiert radiale Richtungen in der flächigen Gitterstruktur (in Fig 2A in der Zeichenebene beginnend an der Strahlmittenposition 23), entlang der die radialen Phasenverläufe vorliegen.

Für die Phasenverteilung 25 der Fig. 2A zeigt Fig. 2B radiale Phasenverläufe27A und 27B (als Phasenprofilkurven), die durch den Verlauf der Phasenschiebungswerten durch jeweils zwei gegenüberliegende Segmente 31, 31' bzw. 33, 33' gebildet werden. Insbesondere zeigt Fig. 2B den Verlauf der Phasenschiebungswerte entlang der X-Achse bei Y=0 (Linie 29A in Fig. 2A gehört zur Phasenverlauf 27A) durch die Segmente 31, 31' sowie den Verlauf der Phasenschiebungswerte durch die Segmenten 33, 33', die an die Segmente 31, 31' angrenzen (Phasenverlauf 27B). Beide Phasenverläufe 27A und 27B verlaufen durch die Strahlmittenposition 23 (X = 0 und Y = 0).

In den Segmenten liegen Phasenschiebungswerte vor, die sich in Abhängigkeit vom radialen Abstand r von der Strahlmittenposition 23 gemäß einer beispielhaften periodischen Funktion (z.B. eines Sägezahngitters) ändern. Man erkennt, dass die Phasenverläufe in radialer Richtung einen linearen Anstieg aufweisen. In einem Winkelsegment bilden die Phasenschiebungswerte bezüglich der Strahlmittenposition 23 eine radialsymmetrischen Phasenverlauf aus, die in radialer Richtung einer Gitterfunktionen zugeordnet werden kann. In anderen Worten sindd die Phasenverläufe -27A, 27B abschnittsweise rotationssymmetrisch. In den Segmenten in Fig. 2B weisen die Gitterfunktionen die gleiche Gitterperiode Tr in radialer Richtung und unabhängig von der radialen Position auf.

Zwischen zwei benachbarten Winkelsegmenten kann eine Verschiebung der Phasen vorliegen. Diese ist in Fig. 2B beispielhaft durch einen Segmentgitterphasenunterschied ΔΘj angegeben. Die Segmentgitterphase Θj kann an der Strahlmittenposition 23 z.B. hinsichtlich eines rotationssymmetrischen Gitters angegeben werden, dessen Phase in einem Ursprung des Gitters "Null" ist. Beispielhaft ist die Segmentgitterphase Θj in Fig. 2B "0" für die Winkelsegmente 31, 31' und "(-π)" für die Winkelsegmente 33, 33'. Dies entspricht Segmentgitterphasenunterschied ΔΘj von (-π) zwischen den Segmentgitterphasen Θj der benachbarten Winkelsegmenten 31 und 33 sowie zwischen den benachbarten Winkelsegmenten 31' und 33'.

In einigen Ausführungsformen weisen die Gitterfunktionen (nur) einen Anteil eines (radialen) Sägezahngitterphasenverlaufs mit sich wiederholenden Anstiegsbereichen 41 auf, in denen die Phase z.B. von (-π) bis π durchläuft (entsprechend der linearen Phasenänderung eines Axicon siehe Fig 1B). D.h., der Anteil des Sägezahngitterphasenverlaufs ist ein erster hierin diskutierter Aspekt bei der Wahl des Phasenverlaufs. Weitere Anteile im Phasenverlauf sind möglich, die dem hierin offenbarten Konzepten überlagert werden können.

Als Beispiel für eine Integration eines weiteren Phasenanteils kann eine Phasenkomponente einer Fernfeldoptik, die im optischen System 13 strahlabwärts des Strahlformungselements 15 angeordnet ist, in die Phasenverteilung aufgenommen werden. So kann in die zweidimensionale Phasenverteilung eine Kollimationsphasenverteilung integriert werden, die über die Mehrzahl von Winkelsegmenten bezüglich der Strahlmittenposition beispielsweise radialsymmetrisch ausgebildet ist. (Siehe hierzu auch die eingangs genannten Anmeldungen der Anmelderin.)

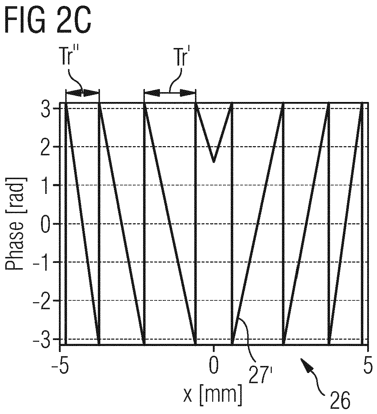

Im Graph 26' der Fig. 2C ist eine Überlagerung eines in Fig. 2B gezeigten Sägezahngitterphasenverlaufs (Axicon-Phasenanteil) mit einem (rotationssymmetrischen) Linsenphasenanteil verdeutlicht. Man erkennt, dass bei einem Phasenverlauf 27' durch zwei gegenüberliegende Segmente eine Gitterperiode mit zunehmendem Radius (Abstand von der Strahlmittenposition 23) zunimmt, d.h. Tr" < Tr'. Die Gitterperiode in radialer Richtung kann beispielsweise einen asphärischen, bevorzugt einen quadratischen und besonders bevorzugt einen linearen, Verlauf aufweisen, wie es beispielsweise der Fall wäre, wenn man eine Linsenfunktion integrieren würde.

Ist die radiale Abhängigkeit der Gitterperiode für alle Segmente gleich, bilden die radialsymmetrischen Phasenverläufe in radialer Richtung in den verschiedenen Segmenten ebenfalls Gitterfunktionen aus, die eine gleiche Gitterperiode aufweisen.

Erfindungsgemäß kann in einigen Ausführungsformen eine Steigung eines Anstiegsbereichs 41 in jedem der Sägezahngitterphasenverläufe einem vorbestimmten Axicon-Winkel (Axicon-Winkel γ in Fig. 1B) entsprechen. Dieser ist dem diffraktiven optischen Strahlformungselement 15 zugeordnet und bestimmt die Ausbildung des Bessel-Strahls. Der vorbestimmte Axicon-Winkel kann z.B. im Bereich von 0,5° bis 40° (typischerweise im Bereich von 1° bis 5°) für eine Erzeugung eines realen Bessel-Strahl-Zwischenfokus mit dem Laserstrahl strahlabwärts des diffraktiven optischen Strahlformungselements (31) liegen. Für ein Zugrundelegen eines virtuellen Bessel-Strahl-Zwischenfokus strahlaufwärts des diffraktiven optischen Strahlformungselements 15 kann der vorbestimmte Axicon-Winkel z.B. im Bereich von -0,5° bis - 40° (typischerweise im Bereich von -1° bis -5°) liegen.

Für die Umsetzung der hierin offenbarten Konzepte unterscheiden sich die azimutalen Segmentbreiten von mindestens zwei benachbarten Winkelsegmenten. Alternativ oder zusätzlich weisen die Segmentgitterphasen Θj von mindestens zwei benachbarten Winkelsegmenten einen Segmentgitterphasenunterschied ΔΘj zwischen 0 und 2π, insbesondere bei für alle Segmente gleichen Segmentbreiten zwischen 0 und π oder zwischen π und 2π auf. In einigen Ausführungsformen können zusätzlich mindestens zwei benachbarte Winkelsegmente einen Segmentgitterphasenunterschied ΔΘj von π aufweisen.

Man erkennt in Fig. 2A ferner, dass beispielhaft die Phasenverteilung 25 bezüglich der Strahlmittenposition 23 punktsymmetrisch ausgebildet ist. Ferner können mindestens zwei, insbesondere sich bezüglich der Strahlmittenposition 23 gegenüberliegende, Winkelsegmente bezüglich der Strahlmittenposition 23 identische radialsymmetrische Phasenverläufe ausbilden. Allgemein kann die zweidimensionale Phasenverteilung durch eine oder mehrere Symmetrieachsen gekennzeichnet sein; in Fig. 2A verlaufen Symmetrieachsen entlang der X-Achse, die Y-Achse sowie durch die Diagonalen der quadratischen Grundform des Strahlformungselements.

Wie bereits erwähnt können die Strahlformungssysteme unterschiedliche Segmentgrößen aufweisen, wie sie z.B. durch die azimutale Segmentbreite (den azimutalen Winkelbereich Δβj) bestimmt wird. Ferner kann die azimutale Lage eines Winkelsegments (hierin auch als Segmentposition bezeichnet) variieren, so dass vielfältige Optimierungsmöglichkeiten bestehen. In Fig. 2A ist eine Segmentposition für das Segment mit dem azimutalen Winkelbereich Δβj durch einen Winkel αj bezüglich der X-Achse verdeutlicht, d.h. dem Winkel zwischen der Linie 29A und der Diagonalen, die als Linie 29B in Fig. 2A beispielsweise durch die Mitte (in azimutaler Richtung) des Segments verläuft.

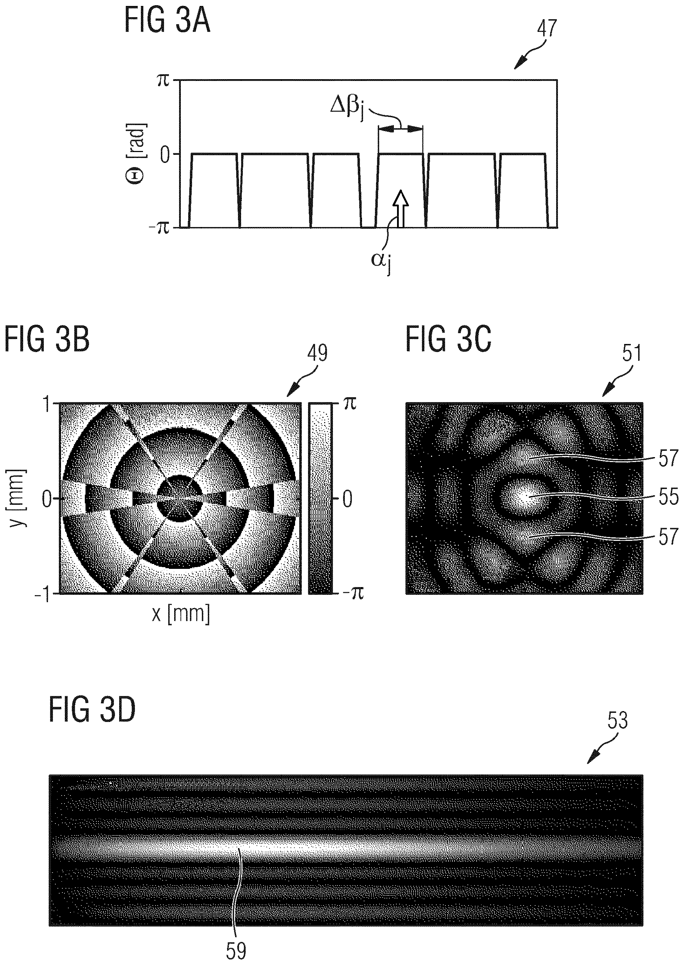

Die nachfolgend anhand der Figuren 3A bis 3D und 4A bis 4D beschriebenen Ergebnisse bei der Erzeugung langgezogener beugungsfreier Fokuszonen sind beispielhaft zu verstehen. Es wird verstanden werden, dass erfindungsgemäß weitere Fokusverteilungen realisiert werden können, in dem die Ausgangsparameter Segmentgitterphasenunterschied und optional einer oder mehrere der Parameter Segmentposition, Segmentbreite und Segmentanzahl verändert werden.

Die hierin beschriebenen Konzepte können allgemein wie folgt dargestellt werden:
Ganz allgemein moduliert ein ideal dünnes Axicon das Eingangsfeld mit einer radialsymmetrischen Phasenverteilung mit linearem Anstieg: Φ^{axi} (*r*) *= kᵣr* (kᵣ = 2*pi/Tr mit Tr der Gitterperiode des Sägezahngitters).
Dabei ist kᵣ durch den Axiconwinkel γ, den Brechungsindex n und die Wellenlänge λ gegeben (Kleinwinkelnäherung angenommen): *kᵣ* = 2*π*(*n* - 1)-γ/λ
(Siehe z.B.: J. Leach, G. M. Gibson, M. J. Padgett, E. Esposito, G. McConnell, A. J. Wright, and J. M. Girkin, "Generation of achromatic bessel beams using a compensated spatial light modulator," Opt. Express14, 5581-5587(2006))
Die hierin offenbarten Konzepte erhalten die radiale Abhängigkeit zur Gewährleistung einer in Ausbreitungsrichtung beugungsfreien Fokuszone, wobei eine azimutale Abhängigkeit durch die Ausbildung von Winkelsegmenten hinzugenommen wird: Φ(*r*,*ϕ*) = *kᵣr +* Θ(*ϕ*)

Hinsichtlich der Einflussnahme auf die Ausbildung der Intensitätsbereiche wird die azimutale Abhängigkeit Θ(*ϕ*) wählbar und kann z.B. zwischen Segementen Sprünge aufweisen. (Bei infinitesimal kleinen Winkelsegmenten geht ΔΘj in Θ(*ϕ*) über.) Die azimutale Abhängigkeit in den Winkelsegmenten kann mittels eines Optimieralgorithmus für vorgegebene Zielparameter bestimmt werden. Beispielsweise kann der Optimieralgorithmus von Ausgangsparametern wie Segmentgitterphase, Anzahl und/oder Position von Winkelsegmenten ausgehen oder überdies einen oder mehrere dieser Ausgangsparameter in die Optimierung einbeziehen.

Nachfolgend werden in den Figuren 3A bis 3D und 4A bis 4D zur Verdeutlichung der Möglichkeiten der hierin vorgeschlagenen Konzepte zwei beispielhafte Phasenverteilungen auf einem strahlformenden Element sowie sich ergebende Intensitätsverteilungen in einem lateralen Schnitt durch die erzeugte Fokuszone und einem Schnitt entlang der axialer Richtung gezeigt.

Ausgangspunkt der beiden beispielhaften Phasenverteilungen ist, dass die Winkelsegmente eine gleiche (Gitter-) Periode eines radial-symmetrischen Sägezahngitters aufweisen.

Die Figuren 3A und 3B zeigen eine azimutale Verteilung 47 der Segmentgitterphasen Θj und eine zweidimensionale Phasenverteilung 49 eines beispielhaften Strahlformungselements, bei dem sich die azimutalen Segmentbreiten der benachbarten Winkelsegmente unterscheiden. Im Sinne eines nach den hierin offenbarten Konzepten "modifizierten diffraktiven Axicon" ist die zweidimensionale Phasenverteilung 49 in j=12 Winkelsegmente untergliedert. In jedem Segmentbereich liegt ein radialsymmetrischer Phasenverlauf um eine vorgesehene optische Achse, hier der Strahlmittenposition 23 des Strahlformungselements, mit einer Segmentgitterphase Θj vor. Somit stimmen die optischen Achsen der jeweiligen Winkelsegmente überein. Abwechselnd weisen die Winkelsegmente Segmentgitterphasen Θj von 0 und (-π) auf und es liegen entsprechend Segmentgitterphasenunterschiede ΔΘj von π zwischen benachbarten Winkelsegmenten vor.

Beispielhaft ist für ein Segment eine Segmentposition am Winkel αj und eine Segmentbreite (Winkelbereich Δβj) in Fig. 3A eingezeichnet.

Die Figuren 3C und 3D zeigen eine transversale Intensitätsverteilung (transversales Strahlprofil 51) und einen Schnitt entlang der Ausbreitungsrichtung (longitudinales Strahlprofil 53) nach Fokussierung des phasenaufgeprägten Strahls. Man erkennt im transversalen Strahlprofil 51 die Ausbildung eines speziell geformten Hauptmaximums 55 und mehrere Nebenmaxima 57. Die Nebenmaxima 57 liegen z.B. unterhalb einer relevanten Schwellenfluenz/-intensität eines zu bearbeitenden Materials. Im longitudinalen Strahlprofil 53 erkennt man eine Ausbildung einer langgezogenen Fokuszone 59, die keine Beugungseffekte entlang der Ausbreitungsrichtung zeigt.

Die Figuren 4A und 4B zeigen eine azimutale Verteilung 61 der Segmentgitterphasen Θj und eine zweidimensionale Phasenverteilung 63 eines weiteren beispielhaften Strahlformungselements, bei dem sich die Segmentgitterphasen Θj im Wesentlichen aller benachbarten Winkelsegmente unterscheiden. Es liegen Segmentgitterphasenunterschiede ΔΘj zwischen 0 und 2π zwischen benachbarten Winkelsegmenten vor, wobei die azimutalen Segmentbreiten aller Winkelsegmente gleich sind. Die zweidimensionale Phasenverteilung 63 ist in j=200 Winkelsegmente untergliedert. In jedem Segmentbereich liegt ein radialsymmetrischer Phasenverlauf um eine vorgesehene optische Achse, hier der Strahlmittenposition 23 des Strahlformungselements, vor.

Man erkennt auch in Fig. 4A, dass sich die Sägezahngitter in den Winkelsegmenten durch gleiche (identische) Gitterperioden auszeichnen. In anderen Worten entsprechen die Phasenaufprägungen in den Winkelsegmenten jeweils einem Axicon mit gleichem Axiconwinkel, aber mit unterschiedlichen Phasenbeitrag in der Axicon-Spitze. Entsprechend sind die Gitterfunktionen (Phasenverläufe) zueinander phasenverschoben.

Die Figuren 4C und 4D zeigen eine transversale Intensitätsverteilung (transversales Strahlprofil 65) und einen Schnitt entlang der Ausbreitungsrichtung (longitudinales Strahlprofil 67) nach Fokussierung des phasenaufgeprägten Strahls. Man erkennt im transversalen Strahlprofil 65 die Ausbildung von vier aufgereihten Hauptmaxima 69 umgeben von mehreren Nebenmaxima 71. Die Nebenmaxima 71 liegen z.B. wieder unterhalb einer relevanten Schwellenfluenz/-intensität eines zu bearbeitenden Materials, sodass sich bei der Bearbeitung mit einem Laserpuls vier linear aufgereihte Modifikationen ausbilden können. Im longitudinalen Strahlprofil 67, das die vier Hauptmaxima 69 schneidet, erkennt man entsprechend vier langgezogene Fokuszonen 73, die keine Beugungseffekte entlang der Ausbreitungsrichtung zeigen.

Es wird explizit betont, dass alle in der Beschreibung und/oder den Ansprüchen offenbarten Merkmale als getrennt und unabhängig voneinander zum Zweck der ursprünglichen Offenbarung ebenso wie zum Zweck des Einschränkens der beanspruchten Erfindung unabhängig von den Merkmalskombinationen in den Ausführungsformen und/oder den Ansprüchen angesehen werden sollen. Der Gegenstand der Erfindung ist in den beigefügten Ansprüchen festgelegt.

## Patentansprüche

1. Diffraktives optisches Strahlformungselement (15) zum Aufprägen einer Phasenverteilung auf ein transversales Strahlprofil eines Laserstrahls (5) mit
aneinander angrenzenden Flächenelementen (15A), die eine flächige Gitterstruktur aufbauen, bei der jedem Flächenelement (15A) ein Phasenschiebungswert zugeordnet ist und die Phasenschiebungswerte eine zweidimensionale Phasenverteilung (25) definieren, wobei
- die zweidimensionale Phasenverteilung (25) eine Strahlmittenposition (23) aufweist, die eine radiale Richtung in der flächigen Gitterstruktur definiert,
- die Flächenelemente (15A) einer Mehrzahl von Winkelsegmenten (31, 31'; 33, 33') zugeordnet sind,
- jedes Winkelsegment (31, 31'; 33, 33') eine azimutale Segmentbreite (Δβj) bezüglich der Strahlmittenposition (23) aufweist,
- die Phasenschiebungswerte in den Winkelsegmenten (31, 31'; 33, 33') jeweils bezüglich der Strahlmittenposition (23) radialsymmetrische Phasenverläufe ausbilden,
- die radialsymmetrischen Phasenverläufe in radialer Richtung Gitterfunktionen ausbilden, die eine gleiche Gitterperiode (Tr) aufweisen, und
- zu jeder der Gitterfunktionen eine Segmentgitterphase (Θ) zugeordnet ist, und wobei
sich die azimutalen Segmentbreiten (Δβj) von mindestens zwei benachbarten Winkelsegmenten (31, 31'; 33, 33') unterscheiden und
die Segmentgitterphasen (Θj) von mindestens zwei benachbarten Winkelsegmenten (31, 31'; 33, 33') einen Segmentgitterphasenunterschied (ΔΘj) zwischen 0 und 2π aufweisen.

2. Diffraktives optisches Strahlformungselement (15) nach Anspruch 1, wobei die Phasenverteilung (25) bezüglich der Strahlmittenposition (23) punktsymmetrisch ist.

3. Diffraktives optisches Strahlformungselement (25) nach Anspruch 1 oder 2, wobei mindestens zwei, insbesondere sich bezüglich der Strahlmittenposition (23) gegenüberliegende, Winkelsegmente (31, 31'; 33, 33') bezüglich der Strahlmittenposition (23) identische radialsymmetrische Phasenverläufe ausbilden.

4. Diffraktives optisches Strahlformungselement (15) nach einem der vorhergehenden Ansprüche, wobei die Gitterfunktionen jeweils einen Anteil eines Sägezahngitterphasenverlaufs aufweisen, wobei eine Steigung eines Anstiegsbereichs (41) in jedem der Sägezahngitterphasenverläufe einem vorbestimmten Axicon-Winkel (γ) entspricht, der dem diffraktiven optischen Strahlformungselement (15) zugeordnet ist.

5. Diffraktives optisches Strahlformungselement (15) nach Anspruch 4, wobei der vorbestimmte Axicon-Winkel (γ)
im Bereich von 0,5° bis 40° für eine Erzeugung eines realen Bessel-Strahl-Zwischenfokus mit dem Laserstrahl (5) strahlabwärts des diffraktiven optischen Strahlformungselements (15) oder
im Bereich von -0,5° bis -40° für ein Zugrundelegen eines virtuellen Bessel-Strahl-Zwischenfokus strahlaufwärts des diffraktiven optischen Strahlformungselements (15) liegt.

6. Diffraktives optisches Strahlformungselement (15) nach einem der vorhergehenden Ansprüche, wobei die azimutalen Segmentbreiten im Bereich von 2π/300 bis π liegen und wobei optional jedes der Mehrzahl von Winkelsegmenten (31, 31'; 33, 33') eine gleiche vorbestimmte Segmentbreite aufweist.

7. Diffraktives optisches Strahlformungselement (3151) nach einem der vorhergehenden Ansprüche, wobei die zweidimensionale Phasenverteilung (25) durch eine oder mehrere Symmetrieachsen gekennzeichnet ist.

8. Diffraktives optisches Strahlformungselement (15) nach einem der vorhergehenden Ansprüche, wobei die Gitterperiode in radialer Richtung konstant ausgebildet ist.

9. Diffraktives optisches Strahlformungselement (15) nach einem der Ansprüche 1 bis 7, wobei die Gitterperiode in radialer Richtung einen asphärischen, bevorzugt quadratischen und besonders bevorzugt einen linearen Verlauf, aufweist.

10. Laserbearbeitungsanlage (1) für die Bearbeitung eines Materials (3) mit einem Laserstrahl (5) durch Modifizieren des Materials (3) in einer Fokuszone (7), die in einer Ausbreitungsrichtung (9) des Laserstrahls (5) langgezogen ausgebildet ist, mit:
einer Laserstrahlquelle (11), die einen Laserstrahl (5) ausgibt,
einem optischen System (13), das
- ein diffraktives optisches Strahlformungselement (15) nach einem der Ansprüche 1 bis 9 und
- ein strahlformendes und strahlführendes Modul (17) mit einer Fokussierlinse (17A) aufweist,
wobei das diffraktive optische Strahlformungselement (15) im Strahlengang des Laserstrahls (5) angeordnet ist, um dem Laserstrahl (5) eine zweidimensionale Phasenverteilung aufzuprägen, und
die zweidimensionale Phasenverteilung eine Ausbildung der langgezogenen Fokuszone (7) im Material (3) durch Fokussieren des Laserstrahls (5) mit der Fokussierlinse (17A) bewirkt.

11. Laserbearbeitungsanlage (1) nach Anspruch 10, wobei eine Strahlmittenposition (23) des diffraktiven optischen Strahlformungselements (15) auf eine Strahlmitte eines transversalen Strahlprofils des Laserstrahls (5) ausgerichtet ist.

12. Laserbearbeitungsanlage (1) nach Anspruch 10 oder 11, ferner mit einer Werkstückhalterung (19), wobei eine relative Positionierbarkeit des strahlformenden und strahlführenden Moduls (17) und eines von der Werkstückhalterung (19) bereitgestellten Werkstücks als zu bearbeitendes Material (3) vorgesehen ist.

## Claims

1. A diffractive optical beam-shaping element (15) for imprinting a phase distribution on a transverse beam profile of a laser beam (5) with
surface elements (15A) adjacent to one another, which build up a flat lattice structure, where each surface element (15A) is assigned a phase shift value and the phase shift values define a two-dimensional phase distribution (25), wherein
- the two-dimensional phase distribution (25) has a beam center position (23) that defines a radial direction in the flat lattice structure,
- the surface elements (15A) are assigned to a plurality of angular segments (31, 31'; 33, 33'),
- each angular segment (31, 31'; 33, 33') has an azimuth segment width (Δβj) with respect to the beam center position (23),
- the phase shift values in the angular segments (31, 31'; 33, 33') form radially symmetrical phase curves with respect to the beam center position (23),
- the radially symmetrical phase curves in the radial direction form lattice functions that have the same lattice period (Tr), and
- a segment lattice phase (Θ) is assigned to each of the lattice functions, and wherein
the azimuthal segment widths (Δβj) of at least two adjoining angular segments (31, 31'; 33, 33') differ and
the segment lattice phases (Θj) of at least two adjoining angular segments (31, 31'; 33, 33') have a segment lattice phase difference (ΔΘj) between 0 and 2π.

2. The diffractive optical beam-shaping element (15) according to claim 1, wherein the phase distribution (25) is point-symmetric with respect to the beam center position (23).

3. The diffractive optical beam-shaping element (25) according to claim 1 or 2, wherein at least two angular segments (31, 31'; 33, 33'), in particular those lying opposite one another with respect to the beam center position (23), form identical radially symmetrical phase curves with respect to the beam center position (23).

4. The diffractive optical beam-shaping element (15) according to one of the preceding claims, wherein the lattice functions each comprise a portion of a sawtooth lattice phase profile, wherein a slope of a rising portion (41) in each of the sawtooth lattice phase profiles corresponds to a predetermined Axicon angle (γ) associated with the diffractive optical beam shaping element (15).

5. The diffractive optical beam-shaping element (15) according to claim 4, wherein the predetermined Axicon angle is (γ)
within the range of 0.5° to 40° for generating a real Bessel beam intermediate focus with the laser beam (5) downstream of the diffractive optical beam-shaping element (15), or
within the range of -0.5° to -40° for assuming a virtual Bessel beam intermediate focus upstream of the diffractive optical beam-shaping element (15).

6. The diffractive optical beam-shaping element (15) according to one of the preceding claims, wherein the azimuthal segment widths are in the range from 2π/300 to π and wherein optionally each of the plurality of angular segments (31, 31', 33, 33') has an equal predetermined segment width.

7. The diffractive optical beam-shaping element (3151) according to one of the preceding claims, wherein the two-dimensional phase distribution (25) is **characterized by** one or a plurality of axes of symmetry.

8. The diffractive optical beam-shaping element (15) according to one of the preceding claims, wherein the lattice period is designed to be constant in the radial direction.

9. The diffractive optical beam-forming element (15) according to any one of claims 1 to 7, wherein the lattice period in the radial direction has an aspherical, preferably square and particularly preferably, a linear profile.

10. A laser-machining apparatus (1) for machining a material (3) using a laser beam (5) by modifying the material (3) in a focus zone (7), the focus zone being elongated in a propagation direction (9) of the laser beam (5), with:
a laser beam source (11) that emits a laser beam (5),
an optical system (13) that
- has a diffractive optical beam-shaping element (15) according to one of claims 1 to 9, and
- has a beam-forming and beam-guiding module (17) with a focusing lens (17A),
wherein the diffractive optical beam-shaping element (15) is arranged in the beam path of the laser beam (5) in order to imprint a two-dimensional phase distribution on the laser beam (5), and
the two-dimensional phase distribution causes a formation of the elongated focus zone (7) in the material (3) by focusing the laser beam (5) with the focusing lens (17A).

11. The laser-machining apparatus (1) according to claim 10, wherein a beam center position (23) of the diffractive optical beam-shaping element (15) is orientated to a beam center of a transverse beam profile of the laser beam (5).

12. The laser-machining apparatus (1) according to claim 10 or 11, further with a workpiece holder (19), wherein the beam-shaping and beam-guiding module (17) and a workpiece provided by the workpiece holder (19) as the material (3) to be processed can be positioned relative to one another.

## Revendications

1. Élément optique diffractif de mise en forme de faisceau (15) pour imposer une distribution de phase sur un profil de faisceau transversal d'un faisceau laser (5), comportant
des éléments de surface (15A) adjacents qui forment une structure de réseau plane, chaque élément de surface (15A) se voyant attribuer une valeur de déphasage et les valeurs de déphasage définissant une distribution de phase bidimensionnelle (25), dans laquelle
- la distribution de phase bidimensionnelle (25) comporte une position de faisceau centrale (23) qui définit une direction radiale dans la structure de réseau plane,
- les éléments de surface (15A) sont attribués à une pluralité de segments angulaires (31, 31' ; 33, 33'),
- chaque segment angulaire (31, 31' ; 33, 33') présente une largeur de segment azimutale (Δβj) par rapport à la position de faisceau centrale (23),
- les valeurs de déphasage dans les segments angulaires (31, 31'; 33, 33') forment chacune des courbes de phase radialement symétriques par rapport à la position de faisceau centrale (23),
- les courbes de phase radialement symétriques forment des fonctions de réseau en direction radiale qui ont une même période de réseau (Tr), et
- une phase de réseau de segments (Θ) est attribuée à chacune des fonctions de réseau, et dans laquelle
les largeurs de segment azimutales (Δβj) d'au moins deux segments angulaires adjacents (31, 31' ; 33, 33') diffèrent, et
les phases de réseau de segments (Θj) d'au moins deux segments angulaires adjacents (31, 31' ; 33, 33') présentent une différence de phase de réseau de segments (ΔΘj) comprise entre 0 et 2π.

2. Élément optique diffractif de mise en forme de faisceau (15) selon la revendication 1, dans lequel la distribution de phase (25) présente une symétrie centrale par rapport à la position de faisceau centrale (23).

3. Élément optique diffractif de mise en forme de faisceau (25) selon la revendication 1 ou 2, dans lequel au moins deux segments angulaires (31, 31' ; 33, 33'), en particulier opposés l'un à l'autre par rapport à la position de faisceau centrale (23), forment des courbes de phase radialement symétriques identiques par rapport à la position de faisceau centrale (23).

4. Élément optique diffractif de mise en forme de faisceau (15) selon l'une des revendications précédentes, dans lequel les fonctions de réseau présentent chacune une partie de courbe de phase de réseau en dents de scie, dans lequel la pente d'une zone de pente (41) dans chacune des courbes de phase de réseau en dents de scie correspond à un angle d'axicon prédéterminé (γ) attribué à l'élément optique diffractif de mise en forme de faisceau (15).

5. Élément optique diffractif de mise en forme de faisceau (15) selon la revendication 4, dans lequel l'angle d'axicon prédéterminé (γ) est compris
dans une plage de 0,5° à 40° pour générer un foyer intermédiaire de faisceau de Bessel réel avec le faisceau laser (5) en aval de l'élément optique diffractif de mise en forme de faisceau (15), ou
dans une plage de -0,5° à -40° pour former la base d'un foyer intermédiaire de faisceau de Bessel virtuel en amont de l'élément optique diffractif de mise en forme de faisceau (15).

6. Élément optique diffractif de mise en forme de faisceau (15) selon l'une des revendications précédentes, dans lequel les largeurs de segment azimutales sont comprises dans une plage de 2π/300 à π et dans lequel éventuellement chaque segment de la pluralité de segments angulaires (31, 31' ; 33, 33') présente une même largeur de segment prédéterminée.

7. Élément optique diffractif de mise en forme de faisceau (3151) selon l'une des revendications précédentes, dans lequel la distribution de phase bidimensionnelle (25) est **caractérisée par** un ou plusieurs axes de symétrie.

8. Élément optique diffractif de mise en forme de faisceau (15) selon l'une des revendications précédentes, dans lequel la période de réseau en direction radiale est constante.

9. Élément optique diffractif de mise en forme de faisceau (15) selon l'une des revendications 1 à 7, dans lequel la période de réseau en direction radiale présente un tracé asphérique, de préférence carré, et de préférence encore linéaire.

10. Installation de traitement laser (1) pour traiter un matériau (3) avec un faisceau laser (5) en modifiant le matériau (3) dans une zone de focalisation (7) allongée en direction de propagation (9) du faisceau laser (5), comprenant :
une source de faisceau laser (11) émettant un faisceau laser (5),
un système optique (13) comprenant
- un élément optique diffractif de mise en forme de faisceau (15) selon l'une des revendications 1 à 9, et
- un module de mise en forme et de guidage de faisceau (17) avec une lentille de focalisation (17A),
dans laquelle l'élément optique diffractif de mise en forme de faisceau (15) est agencé dans le trajet du faisceau laser (5) afin de conférer au faisceau laser (5) une distribution de phase bidimensionnelle, et
la distribution de phase bidimensionnelle provoque la formation de la zone de focalisation (7) allongée dans le matériau (3) en focalisant le faisceau laser (5) avec la lentille de focalisation (17A).

11. Installation de traitement laser (1) selon la revendication 10, dans laquelle une position de faisceau centrale (23) de l'élément optique diffractif de mise en forme de faisceau (15) est alignée avec un centre de faisceau d'un profil de faisceau transversal du faisceau laser (5).

12. Installation de traitement laser (1) selon la revendication 10 ou 11, comprenant en outre un porte-pièce (19), dans laquelle une capacité de positionnement relatif du module de mise en forme et de guidage de faisceau (17) et d'une pièce à traiter présentée par le porte-pièce (19) comme matériau (3) à traiter est assurée.
